(19) Europäisches Patentamt
European Patent Office
Office européen des brevets

(11) **EP 2 274 506 B1**

(12) **FASCICULE DE BREVET EUROPEEN**

(45) Date de publication et mention de la délivrance du brevet:
**04.11.2015 Bulletin 2015/45**

(21) Numéro de dépôt: **09761887.0**

(22) Date de dépôt: **05.05.2009**

(51) Int Cl.:
***F01N 3/20*** *(2006.01)*

(86) Numéro de dépôt international:
**PCT/FR2009/050835**

(87) Numéro de publication internationale:
**WO 2009/150336 (17.12.2009 Gazette 2009/51)**

(54) **PROCEDE DE CORRECTION DE MODELES D'EMISSION D'OXYDES D'AZOTE**

VERFAHREN ZUR KORREKTUR VON STICKOXIDEMISSIONSMODELLEN

METHOD FOR CORRECTING NITROGEN OXIDE EMISSION MODELS

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **16.05.2008 FR 0853181**

(43) Date de publication de la demande:
**19.01.2011 Bulletin 2011/03**

(73) Titulaire: **Peugeot Citroën Automobiles SA**
**78140 Vélizy-Villacoublay (FR)**

(72) Inventeur: **CHARIAL, Christophe**
**F-92500 Rueil-Malmaison (FR)**

(74) Mandataire: **Ménès, Catherine**
**Peugeot Citroën Automobiles SA**
**Propriété Industrielle (LG081)**
**18, rue des Fauvelles**
**92250 La Garenne Colombes (FR)**

(56) Documents cités:
**DE-A1-102005 042 490     DE-A1-102005 050 709**
**DE-A1-102006 041 676     FR-A- 2 850 134**

## Description

La présente invention se situe dans le domaine du traitement des gaz d'échappement de véhicules automobiles, notamment des systèmes de traitement des gaz d'échappement utilisant un agent réducteur injecté dans la ligne d'échappement d'un véhicule.

Cette invention concerne, plus particulièrement, un procédé destiné à être mis en oeuvre dans des véhicules automobiles munis d'un système de traitement des oxydes d'azote émis par un moteur diesel, le traitement étant effectué par une réduction catalytique sélective des oxydes d'azote en utilisant un réducteur tel que de l'ammoniac.

De tels systèmes de traitement permettent de traiter les gaz d'échappement de manière à ce que les véhicules respectent les niveaux d'émission légalement tolérés, qui sont de plus en plus bas.

La présente invention trouve une application avantageuse, mais non exclusive, dans des véhicules munis de systèmes de traitement de ce type, et dans lesquels l'agent réducteur, tel que l'ammoniac, est stocké dans un réservoir en solution aqueuse, par exemple sous forme d'urée liquide.

La réduction des oxydes d'azote par l'ammoniac en utilisant une réaction de réduction catalytique sélective est une méthode largement utilisée dans les usines stationnaires. La difficulté de la transposition de tels procédés dans le domaine de l'automobile réside dans le stockage de l'agent réducteur dans le véhicule.

Plusieurs solutions ont été développées pour permettre le stockage d'un agent réducteur tel que l'ammoniac dans un véhicule automobile. On a ainsi envisagé d'embarquer l'ammoniac sous forme d'urée solide, d'urée liquide, ou encore de carbamate d'ammonium.

Les systèmes à réduction catalytique sélective, dits SCR, comprennent généralement un catalyseur, siège d'une ou plusieurs réactions chimiques de réduction des oxydes d'azote par l'ammoniac, et désigné par la suite sous le terme de catalyseur SCR.

Or, on a constaté que, pour une meilleure efficacité de traitement des oxydes d'azote, il était utile de stocker l'ammoniac directement au sein d'un catalyseur SCR, siège de la réduction chimique. Toutefois, la taille d'un catalyseur SCR ne permet pas le stockage d'une quantité suffisante d'agent réducteur pour garantir au véhicule une autonomie acceptable. Par conséquent, dans les systèmes existants, on utilise un réservoir d'agent réducteur distinct du catalyseur SCR, et l'injection d'agent réducteur dans le catalyseur en vue d'un stockage est régulée à partir d'un modèle mathématique dont un des paramètres d'entrée est la quantité d'oxydes d'azote émis par le moteur.

On a toutefois constaté que, au cours de la vie d'un véhicule, les caractéristiques de stockage du catalyseur varient, notamment en raison d'une diminution de la capacité de stockage avec l'âge. Par conséquent, il apparaît nécessaire de contrôler en permanence l'injection d'agent réducteur dans le catalyseur.

Dans un premier temps, on a envisagé des procédés dans lesquels on modifie à chaque instant l'injection en augmentant ou diminuant la quantité calculée à l'aide du modèle mathématique. A cet effet, on détermine, à l'aide d'un capteur d'oxydes d'azote, la nature du gaz émis en sortie du catalyseur. Ainsi, si le gaz émis en sortie est un oxyde d'azote, cela signifie que la quantité d'agent réducteur injectée est insuffisante pour réduire l'ensemble des oxydes d'azote et si, au contraire, le gaz émis est un réducteur tel que l'ammoniac, cela signifie qu'une quantité trop importante d'agent réducteur a été injectée en amont du catalyseur.

Toutefois, il est également possible que les sur injections ou sous injections constatées ne soient pas le fait d'un vieillissement du catalyseur, mais d'une erreur dans le modèle mathématique de détermination de la quantité d'agent réducteur à injecter dans le système.

Il est par ailleurs connu du document DE 10 2006 041676 un procédé comprenant la détermination d'une différence entre les concentrations d'oxyde d'azote déterminée et mesurée en aval d'un convertisseur catalytique, différence qui est ensuite comparée à une valeur seuil pour modifier la quantité d'agent réactif à injecter dans la ligne d'échappement d'un moteur thermique.

Afin de remédier à cela, la présente invention vise à proposer un procédé de correction d'un modèle de détermination dans lequel, si on constate que plusieurs corrections successives de la quantité d'agent réducteur sont nécessaires, on procède directement à une correction du modèle mathématique de détermination.

Ainsi, l'invention concerne un procédé de correction d'un modèle de détermination de quantité d'agent réducteur à injecter pour une réduction catalytique sélective des oxydes d'azote contenus dans des gaz d'échappement, en particulier des gaz d'échappement émis par un moteur thermique d'un véhicule automobile, le procédé comprenant les étapes de détermination d'une quantité d'agent réducteur à injecter en fonction de la quantité d'oxydes d'azote émis et d'un modèle mathématique, ledit modèle étant typiquement enregistré dans une mémoire d'un processeur embarqué dans le véhicule ; de détermination, à l'aide d'une mesure de quantité et/ou nature de gaz effectuée en sortie du catalyseur, du caractère ou non correct des conditions dans lesquelles la réaction de réduction est effectuée ; de modification de la quantité d'agent réducteur à injecter si une anomalie est détecter et, si la mise en oeuvre de ce procédé conduit à un nombre de modifications successives de même nature supérieur à une valeur N prédéterminée, la correction du modèle mathématique et le remplacement du modèle mathématique initial par le modèle corrigé.

Selon l'invention, l'étape de déterminer si la réaction est effectuée dans des conditions correctes comprend les étapes de détermination, en fonction de la mesure de quantité de gaz en sortie du catalyseur, une efficacité de conversion des oxydes d'azote en réponse à une injection de la quantité déterminée d'agent réducteur, de comparaison de cette efficacité dite réelle, à une efficacité minimale requise et, si la différence entre l'efficacité requise et l'efficacité réelle est supérieure à un seuil prédéterminé, de détection de la présence d'une anomalie.

Dans une réalisation de l'invention, si la modification de la quantité d'agent réducteur effectuée au cours d'une occurrence du procédé est de même nature que la modification effectuée au cours de l'occurrence précédente, on incrémente un compteur géré par le processeur utilisé pour la mise en oeuvre du procédé, et si la modification est de nature différente de celle effectuée au cours de l'occurrence précédente, on initialise à zéro la valeur du compteur.

Selon une réalisation de l'invention, la correction du modèle mathématique consiste en l'application d'un facteur correctif correspondant à un facteur de correction prédéterminé pondéré par un paramètre variable en fonction de l'état de fonctionnement du véhicule.

Dans une réalisation de l'invention, le facteur de correction prédéterminé est un facteur positif dans le cas où les modifications successives sont des augmentations, et un facteur négatif dans le cas où les modifications successives sont des diminutions.

En outre, dans un exemple de réalisation, le paramètre variable permet de pondérer le facteur de correction en fonction de la vitesse moteur et du couple moteur.

Cette pondération est, dans une réalisation avantageuse, effectuée par la détermination des zones de fonctionnement, définies par une plage de valeurs de vitesse moteur, et une plage de valeurs de couple moteur, et la définition d'une une loi de variation du paramètre variable telle que la valeur du paramètre soit constante à l'intérieur de chacune des zones, et représente la part de temps passé dans cette zone par rapport au temps total, sur une période déterminée.

La part de temps passé est, par exemple, réinitialisée à chaque correction du modèle mathématique, la période déterminée étant ainsi définie comme la période située entre la correction précédente du modèle mathématique et la correction présente.

L'invention se rapporte également à un système de traitement des gaz d'échappement installé dans un véhicule automobile, le traitement consistant en une réduction catalytique sélective, dans un catalyseur, des oxydes d'azote contenus dans les gaz d'échappement par l'agent réducteur stocké dans un réservoir et injecté dans la ligne d'échappement, le système comportant un modèle mathématique de détermination de quantité d'agent réducteur à injecter, et comportant des moyens de mise en oeuvre d'un procédé de détermination conforme à l'invention.

D'autres caractéristiques et avantages de l'invention apparaîtront avec la description détaillée de certains modes de réalisation, cette description étant effectuée à titre non limitatif à l'aide des figures sur lesquelles :

- les figures 1 a et 1 b représentent l'architecture fonctionnelle d'une stratégie de pilotage SCR dans un véhicule automobile,
- la figure 2 montre le déroulement d'un processus de détection d'anomalie et de modification d'injection, tel que mis en oeuvre dans un procédé selon l'invention,
- la figure 3 montre le déroulement chronologique d'un procédé selon l'invention, et
- la figure 4 est un schéma bloc montrant de manière détaillée la correction d'un modèle mathématique dans le cadre d'un procédé selon l'invention.

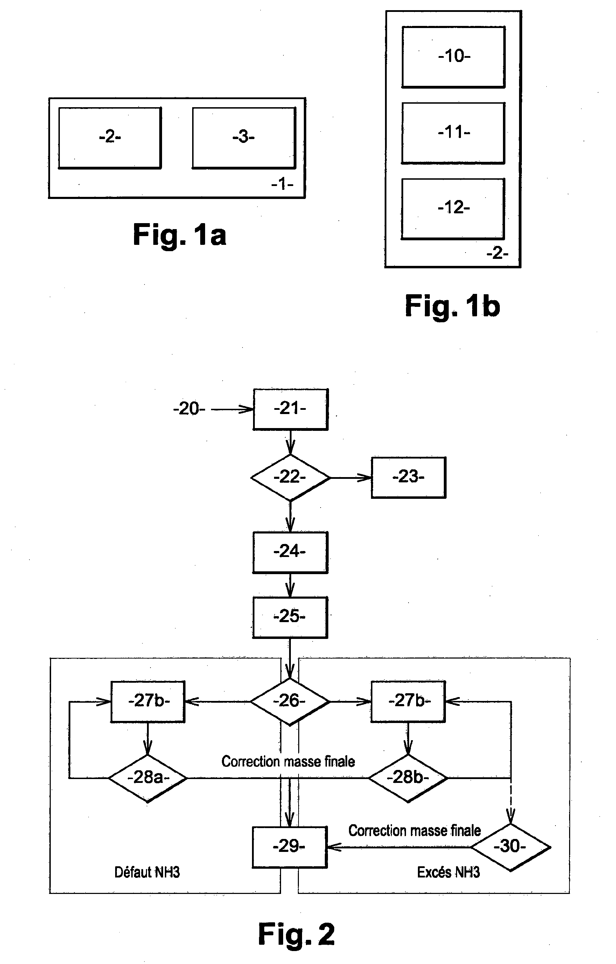

La figure 1 montre l'architecture fonctionnelle d'un module 1 de mise en oeuvre de la stratégie de pilotage SCR dans un véhicule automobile. Cette architecture est décrite ci-après dans le cas d'un système utilisant, en tant qu'agent réducteur, de l'ammoniac, ou plus exactement une solution d'urée, stockée dans un réservoir et injectée dans la ligne d'échappement, et qui, compte tenu de la chaleur dans la ligne d'échappement, se transforme en ammoniac, ammoniac qui va ensuite réagir avec les NOx. Toutefois, cette architecture ne se limite aucunement à ce cas particulier, et peut être adaptée à tout autre agent réducteur.

Dans la suite de la description, les termes « agent réducteur » et « ammoniac » sont indifféremment utilisés, en sachant que, dans tous les cas, tous les moyens et caractéristiques ici décrits peuvent être utilisés avec tout autre agent réducteur.

Une telle stratégie est, généralement, mise en oeuvre par un calculateur spécifique installé à cet effet dans le véhicule automobile, ou par un calculateur existant au préalable, tel que le calculateur moteur.

Au niveau fonctionnel, le module 1 de mise en oeuvre globale de la stratégie de pilotage peut être séparé en deux modules complémentaires : un module 2 de pilotage de l'injection d'urée, et un module 3 de contrôle de l'urée embarquée.

Le module 2 de pilotage de l'injection d'urée est utilisé pour déterminer la quantité d'urée à injecter dans l'échappement à chaque instant. Cette détermination est effectuée à partir de l'ensemble des informations fournies par le module 3 de contrôle de l'urée embarquée, et qui seront détaillées par la suite.

Ce module 3 est chargé d'assurer cette injection et, dans ce cadre, de gérer le réservoir d'urée. Parmi les fonctionnalités de ce module, on peut citer celle permettant de réchauffer l'urée en cas de gel.

La présente invention vise à proposer un procédé de contrôle de la consommation d'agent réducteur, et elle est donc destinée à être intégrée dans le module 3 de contrôle de l'urée embarquée.

De manière plus précise, ce module 3 de contrôle comporte lui-même trois sous modules, à savoir un module 10 de diagnostic embarqué, un module 11 de calcul de la quantité nécessaire d'urée à injecter, et un module 12 de contrôle en boucle fermée de la quantité d'urée à injecter.

Le module 10 est un module permettant de vérifier, en temps réel, l'état de fonctionnement du système de post-traitement des gaz d'échappement.

Le module 11 détermine à chaque instant la quantité d'urée qu'il est nécessaire d'injecter dans l'échappement pour obtenir une réduction des oxydes d'azote la plus efficace possible. Ce calcul est effectué à partir de paramètres relatifs au moteur, tels que le régime ou le couple, ou relatifs à l'échappement, tels que la température du catalyseur, ou le rapport entre la quantité de monoxyde d'azote et de dioxyde d'azote dans les gaz d'échappement. Ce calcul a pour but d'optimiser l'efficacité de conversion des oxydes d'azote émis en sortie du moteur, tout en maintenant les émissions d'ammoniac en dessous des seuils réglementaires.

Le module 12, quant à lui, vient éventuellement corriger la quantité d'urée déterminée par le module 11, par exemple en fonction d'une mesure effectuée par un capteur d'oxydes d'azote installé en sortie du catalyseur SCR. Cette correction permet, notamment de prendre en compte le vieillissement du catalyseur.

La présente invention vise à être intégrée dans le module 11 de calcul de la quantité d'urée à injecter. Le fonctionnement d'un procédé de correction selon l'invention va maintenant être décrit de manière générale à l'aide de la figure 2. Cette figure 2 ne montre pas les étapes préliminaires du procédé, qui consistent à déterminer une quantité d'agent injecteur initiale à injecter, et à injecter cette quantité.

Dans un premier temps, on utilise un capteur de gaz pour déterminer, à l'étape 20, la nature du gaz présent en sortie du catalyseur SCR. En effet, si la réaction chimique de réduction est effectuée complètement et dans des conditions stoechiométriques, le seul gaz normalement émis en sortie du catalyseur est de l'azote. En revanche, s'il y a une sur injection d'agent réducteur ou une sous injection, le gaz émis en sortie sera respectivement de l'ammoniac ou des oxydes d'azote. Ainsi, en utilisant un capteur dont la forme du signal de sortie dépend de la nature du gaz, il est possible de détecter, à l'étape 21, la présence d'une anomalie.

Une telle détection dans le bloc 21 déclenche un processus permettant d'identifier clairement la nature de l'anomalie.

Avant de débuter toute analyse approfondie, on vérifie tout d'abord, dans une étape 22, que le véhicule se situe dans une zone de fonctionnement normal. En effet, si le véhicule se trouve dans une situation inhabituelle, la détection d'une anomalie en sortie du catalyseur de réduction ne reflète pas nécessairement un dysfonctionnement du processus de dosage. Ainsi, de manière préférentielle, il n'est pas tenu compte des mesures effectuées dans ce cas, et le procédé est alors dans une situation 23 dans laquelle aucune action n'est effectuée.

En revanche, si le véhicule se trouve dans un état de fonctionnement normal, il est nécessaire d'analyser l'anomalie, afin de prendre les mesures correctives nécessaires. Afin de déterminer si l'anomalie est due à une sur injection ou une sous injection, on fait, au bloc 24, l'hypothèse selon laquelle l'efficacité de conversion est insuffisante par rapport à une efficacité souhaitée, c'est à dire que la quantité d'agent réducteur injectée est insuffisante pour convertir tous les oxydes d'azote émis en sortie du moteur.

On effectue alors, au bloc 25, une modification permettant de remédier à cette anomalie supposée. Cette modification consiste, par exemple, en une augmentation de la quantité d'agent réducteur injectée. Suite à cette modification, on effectue une nouvelle mesure en sortie du catalyseur, afin de déterminer, au bloc 26, l'effet de l'injection supplémentaire.

Si, à la suite de l'augmentation d'agent réducteur on constate une amélioration dans l'efficacité de conversion, cela signifie que l'hypothèse de départ était correcte. Par conséquent, on continue, au bloc 27a, à augmenter l'injection, jusqu'à ce que l'on détecte, au bloc 28a, un retour à une efficacité acceptable.

En revanche, si l'augmentation effectuée à l'étape 25 ne conduit pas à une amélioration de l'efficacité, cela signifie que l'hypothèse de sous injection effectuée au départ était fausse. Dans ce cas, il est nécessaire de couper immédiatement l'injection, au bloc 27b, jusqu'à ce que tout l'agent réducteur stocké dans le catalyseur SCR soit désorbé (bloc 28b). Cette désorption peut être relativement longue (bloc 30) avant de revenir à un taux de conversion acceptable sans dégagement d'ammoniac dans l'atmosphère.

Lorsque l'efficacité de conversion est revenue à une situation normale, quelle que soit l'anomalie ayant été détectée, on mémorise, au bloc 29, la nature de la modification effectuée, à savoir une augmentation ou une diminution/coupure de l'injection.

Cette mémorisation de la modification effectuée permet, dans le cadre de la mise en oeuvre d'un procédé selon l'invention, de détecter plusieurs modifications successives de même nature, conduisant à la nécessité de corriger directement le modèle mathématique permettant le dosage.

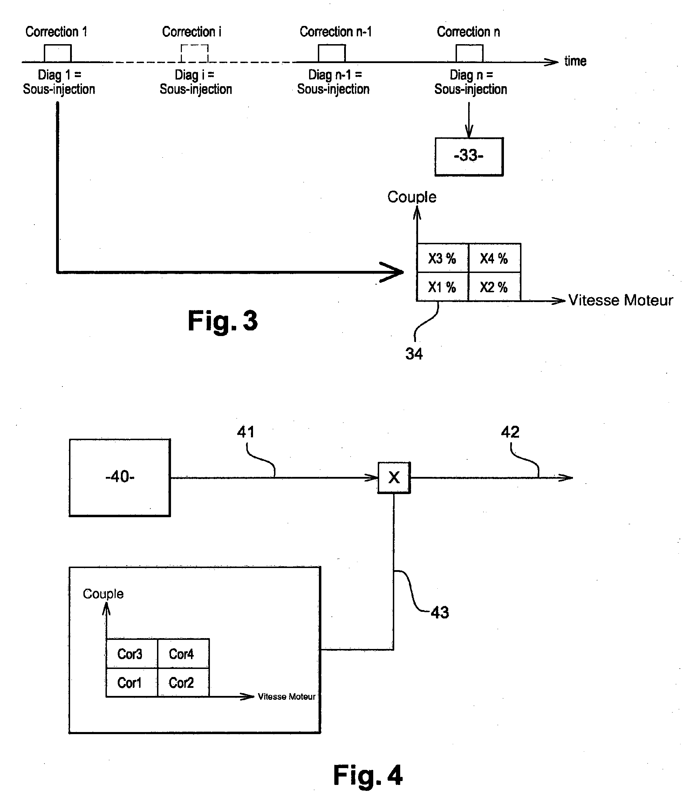

Le déroulement chronologique d'un tel procédé utilisant cette mémorisation est montré en figure 3. Sur l'axe temporel apparaissent différentes occurrences au cours desquelles on effectue un diagnostic (Diag 1,..., Diag i..., Diag n), permettant, par exemple, de détecter un sous injection, et au cours desquelles on applique une correction (Correction 1,...Correction i, ... Correction n) permettant de remédier au problème de sous injection. Les corrections effectuées sont enregistrées en mémoire d'un processeur permettant la mise en oeuvre du procédé.

Ainsi, lorsque le nombre corrections successives de même nature atteint une valeur n prédéterminée, on procède à une correction 33 du modèle mathématique utilisé pour le dosage d'agent réducteur. Cette correction 33 consiste en l'application d'un facteur correctif, en fonction de la phase de fonctionnement dans laquelle se situe le moteur. Un tel facteur correctif correspond à un facteur de correction prédéterminé pondéré par un paramètre variable en fonction de l'état de fonctionnement du véhicule

Afin de d'établir le paramètre variable, on détermine quatre zones distinctes de fonctionnement moteur, caractérisée par des intervalles de variation de la vitesse moteur et du couple moteur. Ainsi, au cours des différentes occurrences de diagnostic/correction, on mesure le temps passé dans chacune de ces zones moteur, afin d'établir une cartographie 34 permettant de déterminer le pourcentage de temps passé par le véhicule dans chacune des zones. Ces pourcentages sont, évidemment, tels que la somme des Xi soit égale à 100%.

Ces quatre zones moteur correspondent aux zones de fonctionnement normal, telles que mentionnées précédemment lors de la description de la figure 2.

Un exemple de correction 33 appliquée au modèle mathématique est détaillé à l'aide du schéma bloc montré en figure 4.

Un modèle mathématique 40 permettant de déterminer une quantité d'azote émis en sortie d'un moteur est enregistré dans un mémoire d'un processeur selon l'invention. Ce modèle mathématique permet de déterminer, en fonction des paramètres de fonctionnement du moteur, une quantité d'oxydes d'azote émise 41.

Connaissant la réaction chimique de réduction sélective il est possible, à partir d'une quantité d'oxydes d'azote, de déterminer une quantité d'ammoniac, ou d'agent réducteur, permettent d'effectuer la réaction dans des conditions stoechiométriques.

Toutefois, dans le cadre de la présente invention, il est nécessaire de corriger le modèle mathématique en appliquant, à la quantité d'oxydes 41 calculée, un facteur correctif 43. Ce facteur correctif est égal à une des valeurs Cor1, Cor2, Cor3 ou Cor4, déterminées de la façon suivante :

$$\text{Cor i new} = \text{Cor i old} + \text{CorMax} * \text{Xi\%},$$

où
Cor i new est la valeur de correction calculée pour un véhicule se trouvant dans la zone de fonctionnement i, Cor i old est la valeur de correction calculée au cours de la mise en oeuvre précédente du procédé pour la zone de fonctionnement i. CorMax est une constante déterminée au préalable en fonction de différents paramètres du système de traitement, qui correspond au facteur de correction décrit précédemment. Lorsque le diagnostic ayant conduit à cette correction montre une sous injection CorMax est une constante positive ; en revanche, lorsque le diagnostic montre une sur injection, CorMax est une constante négative.

Xi% correspond au paramètre variable précédemment cité, et représente la part temporelle de la zone i, déterminée de manière telle que décrite précédemment à l'aide de la figure 3.

Les Xi% sont réinitialisés à chaque correction du modèle, ou à chaque modification de l'injection qui est d'une nature différente de la modification effectuée à l'occurrence précédente, par exemple si on détecte une sous injection, conduisant à une augmentation de la quantité d'agent réducteur injectée, suivie de la détection d'une sur injection, conduisant à une diminution ou une coupure de l'injection.

Un procédé tel que défini dans la présente invention permet de conserver l'efficacité d'un système SCR tout en limitant les émissions de gaz nocifs, tels que l'ammoniac, dans l'atmosphère.

En outre, un tel procédé permet d'économiser le coût d'un capteur d'oxydes d'azote supplémentaire, qui serait situé en amont du système SCR. En effet, dans le présent procédé, la quantité d'oxydes d'azote émis par le moteur est déterminée à partir du modèle mathématique, éventuellement corrigé dans le cadre de la mise en oeuvre de ce procédé.

## Revendications

1. Procédé de correction d'un modèle de détermination de quantité d'agent réducteur à injecter pour une réduction catalytique sélective des oxydes d'azote contenus dans des gaz d'échappement comprenant les étapes suivantes :

   - on détermine, une quantité d'agent réducteur à injecter en fonction de la quantité d'oxydes d'azote émis et d'un modèle mathématique initial,
   - on détermine, à l'aide d'une mesure de quantité et/ou nature de gaz effectuée en sortie du catalyseur, si la réaction de réduction est effectuée dans des conditions correctes,
   - si une anomalie est détectée, on modifie la quantité d'agent réducteur à injecter,
   - si la mise en oeuvre de ce procédé conduit à un nombre de modifications successives de même nature supérieur à une valeur N prédéterminée :

      ◦ on corrige le modèle mathématique, et
      ◦ on remplace le modèle mathématique initial par le modèle corrigé,

   l'étape de déterminer si la réaction de réduction est effectuée dans des conditions correctes comprenant les étapes suivantes :
   - on détermine, en fonction de la mesure de quantité de gaz en sortie du catalyseur, une efficacité de conversion des oxydes d'azote en réponse à une injection de la quantité déterminée d'agent réducteur,

- on compare cette efficacité, dite réelle, à une efficacité minimale requise, et

- si la différence entre l'efficacité minimale requise et l'efficacité réelle est supérieure à un seuil prédéterminé, on détecte la présence d'une anomalie.

2. Procédé selon la revendication 1, **caractérisé en ce que** si la modification de la quantité d'agent réducteur effectuée au cours d'une occurrence du procédé est de même nature que la modification effectuée au cours de l'occurrence précédente, on incrémente un compteur utilisé pour la mise en oeuvre du procédé, et si la modification est de nature différente que celle effectuée au cours de l'occurrence précédente, on initialise à zéro la valeur du compteur.

3. Procédé selon la revendication 1, appliqué au traitement des gaz d'échappement émis par le moteur d'un véhicule automobile, dans lequel la correction du modèle mathématique consiste en l'application d'un facteur correctif correspondant à un facteur de correction prédéterminé pondéré par un paramètre variable en fonction de l'état de fonctionnement du véhicule.

4. Procédé selon la revendication 3, dans lequel le facteur de correction prédéterminé est un facteur positif dans le cas où les modifications successives sont des augmentations, et un facteur négatif dans le cas où les modifications successives sont des diminutions.

5. Procédé selon la revendication 3 ou la revendication 4, dans lequel le paramètre variable permet de pondérer le facteur de correction en fonction de la vitesse moteur et du couple moteur.

6. Procédé selon la revendication 3, dans lequel la pondération est effectuée par détermination des zones de fonctionnement, définies par une plage de valeurs de vitesse moteur, et une plage de valeurs de couple moteur, et la définition d'une loi de variation du paramètre variable telle que la valeur du paramètre soit constante à l'intérieur de chacune des zones, et représente la part de temps passé dans cette zone par rapport au temps total, sur une période déterminée.

7. Procédé selon la revendication 6, dans lequel la part de temps passé est réinitialisée à chaque correction du modèle mathématique, la période déterminée étant ainsi définie comme la période située entre la correction précédente du modèle mathématique et la correction présente.

8. Système de traitement des gaz d'échappement installé dans un véhicule automobile, le traitement consistant en une réduction catalytique sélective, dans un catalyseur, des oxydes d'azote contenus dans les gaz d'échappement par l'agent réducteur stocké dans un réservoir et injecté dans la ligne d'échappement, le système comportant un modèle mathématique de détermination de quantité d'agent réducteur à injecter, et comportant des moyens de mise en oeuvre d'un procédé de détermination conforme à l'une des revendications 1 à 7.

**Patentansprüche**

1. Verfahren zum Korrigieren eines Modells zum Bestimmen der Menge an Reduktionsmittel, das für eine selektive katalytische Verringerung der Stickstoffoxide zu injizieren ist, die in Abgasen enthalten sind, die folgenden Schritte umfassend:

- man bestimmt eine Menge an zu injizierendem Reduktionsmittel in Abhängigkeit von der Menge an ausgestoßenen Stickstoffoxiden und von einem ursprünglichen mathematischen Modell,
- man bestimmt anhand einer Messung der Menge und/ oder der Art des Gases, die am Ausgang des Katalysators durchgeführt wird, ob die Verringerungsreaktion unter korrekten Bedingungen durchgeführt wurde,
- man ändert, falls eine Anomalie festgestellt wurde, die Menge des zu injizierenden Reduktionsmittels,
- falls die Anwendung dieses Verfahrens zu einer sukzessiven Anzahl an Änderungen derselben Art führt, die größer ist, als ein vorbestimmter Wert:

° korrigiert man das mathematische Modell, und
° ersetzt man das ursprüngliche mathematische Modell durch das korrigierte Modell,

wobei der Schritt zum Bestimmen, ob die Verringerungsreaktion unter korrekten Bedingungen durchgeführt wurde, die folgenden Schritte umfasst:

- man bestimmt in Abhängigkeit von der Messung der Gasmenge am Ausgang des Katalysators eine Umwandlungseffizienz der Stickstoffoxide als Reaktion auf eine Injektion der bestimmten Menge an Reduktionsmittel,
- man vergleicht diese Effizienz, die reell genannt wird, mit einer erforderlichen Mindesteffizienz, und
- falls der Unterschied zwischen der erforderlichen Mindesteffizienz und der reellen Effizienz größer ist, als ein vorbestimmter Grenzwert, erkennt man das Vorhandensein einer Anomalie.

**2.** Verfahren nach Anspruch 1, **dadurch gekennzeichnet, dass**, wenn die Änderung der Menge an Reduktionsmittel im Laufe eines Auftretens des Verfahrens in derselben Art erfolgt, wie die Änderung, die im Laufe des vorherigen Auftretens erfolgt ist, man einen Zähler hochsetzt, der für die Anwendung des Verfahrens verwendet wird, und wenn die Änderung auf eine andere Art erfolgt, als jene, die im Laufe des vorherigen Auftretens erfolgt ist, man den Wert des Zählers auf Null zurücksetzt.

**3.** Verfahren nach Anspruch 1, das auf die Behandlung der Abgase angewandt wird, die von einem Kraftfahrzeug ausgestoßen werden, wobei die Korrektur des mathematischen Modells aus der Anwendung eines korrigierenden Beiwerts besteht, der einem bestimmten Korrekturbeiwert entspricht, der durch einen Parameter gewichtet wird, der in Abhängigkeit vom Betriebszustand des Fahrzeugs variiert.

**4.** Verfahren nach Anspruch 3, wobei der bestimmte Korrekturbeiwert für den Fall ein positiver Beiwert ist, dass die sukzessiven Änderungen Erhöhungen sind, und ein negativer Beiwert für den Fall, dass die sukzessiven Änderungen Verringerungen sind.

**5.** Verfahren nach Anspruch 3 oder Anspruch 4, wobei es der variable Parameter ermöglicht, den Korrekturbeiwert in Abhängigkeit von der Motorgeschwindigkeit und vom Motordrehmoment zu gewichten.

**6.** Verfahren nach Anspruch 3, wobei die Gewichtung durch die Bestimmung der Betriebsbereiche durchgeführt wird, die durch einen Wertebereich für die Motorgeschwindigkeit und einen Wertebereich für das Motordrehmoment definiert werden, und die Definition eines Variationsgesetzes für den variablen Parameter, wie zum Beispiel, dass der Parameterwert innerhalb eines jeden der Bereiche konstant ist, und den Zeitanteil darstellt, den man in einem vorbestimmten Zeitraum im Verhältnis zur Gesamtzeit in diesem Bereich verbringt.

**7.** Verfahren nach Anspruch 6, wobei der verbrachte Zeitanteil bei jeder Korrektur des mathematischen Modells zurückgesetzt wird, wobei der vorbestimmte Zeitraum somit als jener Zeitraum definiert wird, der sich zwischen der vorherigen Korrektur des mathematischen Modells und der gegenwärtigen Korrektur befindet.

**8.** Abgasbehandlungssystem, das in einem Kraftfahrzeug installiert ist, wobei die Behandlung aus einer selektiven katalytischen Verringerung der in den Abgasen enthaltenen Stickstoffoxide in einem Katalysator durch das Reduktionsmittel besteht, das in einem Tank gelagert, und in die Auspuffanlage injiziert wird, wobei das System ein mathematisches Modell zum Bestimmen der Menge an zu injizierendem Reduktionsmittel umfasst, und Mittel zur Umsetzung eines Bestimmungsverfahrens nach einem der Ansprüche 1 bis 7 umfasst.

**Claims**

**1.** Method for correcting a model for determining a quantity of reducing agent to be injected for a selective catalytic reduction of the nitrogen oxides contained in exhaust gases, comprising the following steps:

- a quantity of reducing agent to be injected is determined according to the quantity of nitrogen oxides emitted and an initial mathematical model,
- it is determined, by means of a measurement of the quantity and/or nature of gases made at the discharge from the catalyst, whether the reduction reaction is carried out correctly,
- if an abnormality is detected, the quantity of reducing agent to be injected is modified,
- if the implementation of this method leads to a successive number of modifications of the same number greater than a predetermined value N:

  ◦ the mathematical model is corrected, and
  ◦ the initial mathematical model is replaced with the corrected model,

the step of determining whether the reduction reaction is carried out correctly comprising the following steps:
- an efficacy of conversion of the nitrogen oxides in response to an injection of the quantity of reducing agent is determined according to the measurement of the quantity of gas at the discharge from the catalyst,
- this efficacy, referred to as the actual efficacy, is compared with a required minimum efficacy, and
- if the difference between the required minimum efficacy and the actual efficacy is greater than a predetermined threshold, the presence of an abnormality is detected.

**2.** Method according to claim 1, **characterised in that**, if the modification to the quantity of reducing agent made during an occurrence of the method is of the same nature as the modification made during the previous occurrence, a counter used for implementing the method is incremented and, if the modification is of a nature different from that made during the previous occurrence, the value of the counter is initialised to zero.

3. Method according claim 1, applied to the treatment of exhaust gases emitted by the engine of a motor vehicle, in which the correction to the mathematic model consists of the application of a correction factor corresponding to a predetermined correction factor weighted by a parameter variable according to the state of functioning of the vehicle.

4. Method according to claim 3, in which the predetermined correction factor is a positive factor in the case where the successive modifications are increases and a negative factor in the case where the successive modifications are reductions.

5. Method according to claim 3 or claim 4, in which the variable parameter makes it possible to weight the correction factor according to the engine speed and the engine torque.

6. Method according to claim 3, in which weighting is carried out by determining the operating zones, defined by a range of engine speed values, and a range of engine torque values, and the definition of a law of variation of the variable parameter such that the parameter is constant within each of the zones, and represents the proportion of time spent in this zone with respect to the total time, over a given period.

7. Method according to claim 6, in which the proportion of time spent is reinitialised at each correction of the mathematical model, the given period being thus defined as the period situated between the previous correction of the mathematical model and the present correction.

8. System for the treatment of exhaust gases in a motor vehicle, the treatment consisting of a selective catalytic reduction, in a catalyst, of the nitrogen oxides contained in the exhaust gases by means of the reducing agent stored in a reservoir and injected into the exhaust line, the system comprising a mathematical model for determining the quantity of reducing agent to be injected, and comprising means for implementing a determination method according to one of claims 1 to 7.

Fig. 1a

Fig. 1b

Fig. 2

Correction 1          Correction i          Correction n-1          Correction n

Diag 1 =              Diag i =              Diag n-1 =              Diag n =
Sous-injection        Sous-injection        Sous-injection         Sous-injection

time

-33-

Couple

| X3 % | X4 % |
|------|------|
| X1 % | X2 % |

Vitesse Moteur

34

## Fig. 3

-40-                                              41                                              42

X

43

Couple

| Cor3 | Cor4 |
|------|------|
| Cor1 | Cor2 |

Vitesse Moteur

## Fig. 4

## RÉFÉRENCES CITÉES DANS LA DESCRIPTION

**Documents brevets cités dans la description**

- DE 102006041676